# EUROPÄISCHE PATENTANMELDUNG

(11) **EP 2 907 989 A1**
(43) Veröffentlichungstag der Anmeldung: **19.08.2015**
(21) Anmeldenummer: 14154804.0
(22) Anmeldetag: 12.02.2014
(51) Int. Cl.: F02C 9/20, F02C 9/54, F02C 9/28

(54) **Betreiben einer Gasturbinenanlage mit einem Verdichter und einer Turbine**

(71) Anmelder: Siemens Aktiengesellschaft, 80333 München (DE)
(72) Erfinder: Dierkes, Rebecca, 45891 Gelsenkirchen (DE); Engler, Thorsten, 47447 Moers (DE); Gorynski, Markus, 45276 Essen (DE); Sternemann, Ansgar, 44623 Herne (DE)

(57) **Zusammenfassung**

Die Erfindung betrifft ein Verfahren zum Betreiben einer Gasturbinenanlage (2) mit einem Verdichter (12) und einer Turbine (20) und eine Anordnung (42) zur Steuerung einer Gasturbinenanlage (2) mit einem Verdichter (12) und einer Turbine (20) sowie eine Gasturbinenanlage (2) mit einem Verdichter (12) und einer Turbine (20).

Gemäß dem Verfahren wird in Abhängigkeit von zumindest einer aktuellen Umgebungsbedingung der Gasturbinenanlage (2) und/oder zumindest einer Betriebsbedingung der Gasturbinenanlage (2) ein Grenzwert einer Leitschaufelverstellung (46) für den Verdichter (12) der Gasturbine (2) ermittelt und für diese zumindest eine aktuelle Umgebungsbedingung und/oder die zumindest eine Betriebsbedingung ein zu dem Grenzwert der Leitschaufelverstellung (46) für den Verdichter (12) korrespondierende maximal zulässige Turbineneintrittstemperatur (108, 150) oder eine von der Turbineneintrittstemperatur (64) abhängige maximal zulässige Temperatur für die Turbine (20) der Gasturbine (2) ermittelt und die Gasturbine (2) unter Berücksichtigung der ermittelten maximal zulässigen Turbineneintrittstemperatur (108, 150) oder der ermittelten maximal zulässigen Temperatur betrieben.

Die Anordnung (42) weist eine Ermittlungseinrichtung (44) auf, die derart eingerichtet ist, dass das Verfahren nach Anspruch 1 durchführbar ist. Die Gasturbinenanlage (2) weist eine Anordnung (42) nach Anspruch 11 auf.

## Beschreibung

Die Erfindung betrifft ein Verfahren zum Betreiben einer Gasturbinenanlage mit einem Verdichter und einer Turbine und eine Anordnung zur Steuerung einer Gasturbinenanlage mit einem Verdichter und einer Turbine sowie eine Gasturbinenanlage mit einem Verdichter und einer Turbine.

Gasturbinenanlagen, kurz im Folgenden auch Gasturbinen, werden unter anderem zur Energieerzeugung in Gaskraftwerken betrieben. Die konstruktive bzw. verfahrenstechnische Auslegung und Optimierung von Gasturbinen zielt üblicherweise auf einen möglichst wirtschaftlichen und zuverlässigen Betrieb bei einer Grundlast ab. Ein Auslegungskriterium ist dabei eine werkstoffbedingt maximal zulässige Turbineneintrittstemperatur.

Gasturbinenanlagen bzw. Gasturbinen sind Verbrennungskraftmaschinen, die Umgebungsluft ansaugen, diese in einem Verdichter verdichten, aus dieser verdichteten Umgebungsluft und einem Brennstoff in einer Brennkammer bzw. Brennereinheit ein zündfähiges Strömungsmedium herstellen, dieses zünden und in einer Turbine bzw. Turbineneinheit entspannen, wobei eine so freiwerdende thermische Energie in eine rotatorische mechanische Energie gewandelt wird. Die dabei in der Turbine generierte mechanische Leistung wird, neben dem Teil, der zur Umwandlung in elektrische Leistung durch einen der Gasturbinenanlage nachgeschalteten Generator genutzt werden kann, zum Teil auch an den Verdichter zur Verrichtung von Kompressionsarbeit abgeführt.

Ausgehend von einem Betrieb der Gasturbine bei einer Grundlast wird zu einer Steigerung der Gasturbinen-Leistung, beispielsweise, um eine Volllast zu erreichen, üblicherweise ein Verdichteransaugluftmassenstrom erhöht.

Die Erhöhung des Verdichteransaugluftmassenstroms wird üblicherweise mit einer Verstellung einer Verdichterleitschaufel bzw. einer Verdichterleitschaufelreihe erreicht, die auch eine Vorleitschaufel(reihe) sein kann. In diesem Zusammenhang wird auch von einem sog. Turn-Up, also Aufdrehen, bzw. einen Turn-Up-Betrieb der Gasturbinenanlage gesprochen.

Durch die Erhöhung des Verdichteransaugluftmassenstroms kommt es neben der Leistungssteigerung zu einer Erhöhung des Verdichterdruckverhältnisses der Gasturbinenanlage. Infolgedessen kann es zu einer Überschreitung der werkstoffbedingt maximal zulässigen Turbineneintrittstemperatur und damit zu einer unzulässig hohen Turbinenbeanspruchung (sog. Überfeuern der Gasturbine) kommen. Dies kann ein Materialversagen bzw. eine Beeinträchtigung des Betriebs der Gasturbinenanlage bzw. deren Ausfall zur Folge haben.

Aus dem Stand der Technik sind verschiedene Verfahren zum Betreiben einer Gasturbinenanlage mit einem Verdichter und einer Turbine bekannt, insbesondere, um unzulässig hohe Turbinenbeanspruchungen zu vermeiden. Bei einem bekannten Verfahren wird eine maximal zulässige Turbinenaustrittstemperatur festgelegt und ein aktueller Turbinenaustrittstemperaturwert unterhalb der maximal zulässigen Turbinenaustrittstemperatur gehalten, wobei die maximal zulässige Turbinenaustrittstemperatur konstant ist, also einmalig festgelegt wird, und sich auf den Grundlastbetrieb der Gasturbinenanlage bezieht. Da die Turbineneintrittstemperatur üblicherweise Werte von 1200° bis 1700°C annimmt und deshalb mit derzeitiger Messtechnik nicht zuverlässig erfasst werden kann, wird anstelle der Turbineneintrittstemperatur üblicherweise eine von dieser abhängigen Turbinenaustrittstemperatur, die typischerweise im Bereich von 400°C bis 700°C liegt, erfasst und über diese die Gasturbinenanlage gesteuert.

Nach dem Stand der Technik ist ein Betrieb einer Gasturbinenanlage unter Einhaltung einer maximal zulässigen Turbineneintrittstemperatur, insbesondere bei einem Turn-Up-Betrieb der Gasturbinenanlage, nur eingeschränkt möglich.

Es ist eine Aufgabe der Erfindung, eine vorteilhafte technische Lehre zum Betreiben einer Gasturbinenanlage mit einem Verdichter und einer Turbine anzugeben. Insbesondere liegt der Erfindung die Aufgabe zugrunde, einen Betrieb der Gasturbinenanlage unter Einhaltung einer maximal zulässigen Turbineneintrittstemperatur zu erreichen.

Diese Aufgabe wird erfindungsgemäß gelöst mit einem Verfahren zum Betreiben einer Gasturbinenanlage mit einem Verdichter und einer Turbine, einer Anordnung zur Steuerung einer Gasturbinenanlage mit einem Verdichter und einer Turbine und einer Gasturbinenanlage mit einem Verdichter und einer Turbine mit den Merkmalen des jeweiligen unabhängigen Anspruchs. Zweckmäßige Ausgestaltungen und Vorteile der Erfindung ergeben sich aus den weiteren Ansprüchen und der Beschreibung und beziehen sich auf das Verfahren, die Anordnung und die Gasturbinenanlage.

Bei dem Verfahren wird in Abhängigkeit von zumindest einer aktuellen Umgebungsbedingung der Gasturbinenanlage und/oder zumindest einer Betriebsbedingung der Gasturbinenanlage ein Grenzwert einer Leitschaufelverstellung für den Verdichter der Gasturbine ermittelt.

Die zumindest eine aktuelle Umgebungsbedingung bezieht sich zweckmäßigerweise auf den Zustand bzw. eine Zustandsgröße eines aus einer Umgebung in den Verdichter der Gasturbinenanlage einströmenden Strömungsmediums, typischerweise also auf einen Zustand einer Ansaugluft bzw. Verdichtereintrittsluft der Gasturbinenanlage. Die zumindest eine aktuelle Umgebungsbedingung kann eine Verdichtereintrittstemperatur und/oder Verdichtereintrittsfeuchte sein.

Die zumindest eine Betriebsbedingung der Gasturbinenanlage kann eine Drehzahl oder eine andere im Betrieb der Gasturbinenanlage ermittelbare Größe sein.

Beispielsweise kann der Grenzwert der Leitschaufelverstellung von der Verdichtereintrittstemperatur und/oder der Verdichtereintrittsfeuchte und/oder der Drehzahl abhängen und entsprechend diesen Größen ermittelt werden.

Der Grenzwert der Leitschaufelverstellung kann ein Wert sein, bei dessen Erreichen und/oder Überschreiten und/oder Unterschreiten eine Beeinträchtigung der Funktion des Verdichters bzw. der Gasturbinenanlage eintreten kann. So beispielsweise ein Grenzwert gegen ein sog. Verdichterpumpen oder ein Grenzwert gegen ein Vereisen des Verdichters. Der Grenzwert kann sich auf einen Verstellbereich der Leitschaufeln beziehen, bei dessen Verlassen mechanische Schäden auftreten können.

Die Leitschaufelverstellung kann eine Verstellung einer variablen, also verstellbaren, Verdichtervorleitschaufel (Verdichtervorleitschaufelreihe) sein. Die Verstellung ist nicht notwendigerweise auf die Verdichtervorleitschaufel bzw. Verdichtervorleitschaufelreihe beschränkt, sondern kann auch weitere Leitschaufelreihen, insbesondere 1 bis 5 weitere Leitschaufelreihen, umfassen.

Durch die Ermittlung des Grenzwertes der Leitschaufelverstellung in Abhängigkeit der zumindest einem aktuellen Umgebungsbedingung und/oder der zumindest eine Betriebsbedingung der Gasturbinenanlage kann auf einfache Weise eine optimale Anpassung der maximal zulässigen Leitschaufelverstellung, also des Grenzwerts, an die herrschenden Bedingungen erreicht werden. Beispielsweise kann so auf einfache Weise ein Grenzwert ermittelt werden, der auch bei hohen Verdichtereintrittstemperaturen, typischerweise bei 20°C bis 50°C, einen sicheren Turn-Up-Betrieb der Gasturbinenanlage unter Umgehung des sog. Verdichterpumpens ermöglicht.

Unter "ermittelt" ist, im gegebenen Zusammenhang und im Folgenden, eine zweckmäßige Bestimmung, eine Feststellung, eine Messung - jeweils in mittelbarer oder unmittelbarer Weise - oder einer Berechnung eines Wertes zu verstehen.

Für diese zumindest eine aktuelle Umgebungsbedingung und/oder die zumindest eine Betriebsbedingung wird ein zu dem Grenzwert der Leitschaufelverstellung für den Verdichter korrespondierende maximal zulässige Turbineneintrittstemperatur oder eine von der Turbineneintrittstemperatur abhängige maximal zulässige Temperatur für die Turbine der Gasturbine ermittelt.

Beispielsweise erfolgt die Ermittlung der maximal zulässigen Turbineneintrittstemperatur in direkter Abhängigkeit des ermittelten Grenzwertes der Leitschaufelverstellung. Die Ermittlung kann so mittelbar in Abhängigkeit der Verdichtereintrittstemperatur und/oder Verdichtereintrittsfeuchte und/oder einer Antriebswellendrehzahl der Gasturbine erfolgen, da der Grenzwert der Leitschaufelverstellung selbst wiederum von der Verdichtereintrittstemperatur und/oder Verdichtereintrittsfeuchte und/oder einer Antriebswellendrehzahl abhängen kann.

Vorteilhafterweise kann durch die derartige abhängige Ermittlung der maximal zulässigen Turbineneintrittstemperatur oder der von der Turbineneintrittstemperatur abhängigen maximal zulässigen Temperatur eine Überfeuerung bzw. ein Überhitzen der Turbine auch bei schwankenden bzw. wechselnden Umgebungs- und Betriebsbedingungen erreicht werden. Dies gilt insbesondere in einem Turn-Up-Betrieb der Gasturbinenanlage.

Die Gasturbine wird unter Berücksichtigung der ermittelten maximal zulässigen Turbineneintrittstemperatur oder der ermittelten maximal zulässigen Temperatur betrieben.

Von besonderem Vorteil kann so ein Betrieb der Gasturbine, insbesondere oberhalb der Grundlast, also mit gesteigerter Leistung (im Turn-Up-Betrieb), unter Vermeidung einer gesteigerten thermischen Turbinenbelastung erreicht werden. Folglich kann so -insbesondere in einem Turn-Up-Betrieb- ein besonders wirtschaftlicher und zuverlässiger Betrieb der Gasturbinenanlage erzielt werden.

Die Erfindung sieht außerdem eine Anordnung zur Steuerung einer Gasturbinenanlage mit einem Verdichter und einer Turbine vor. Die Anordnung weist eine Ermittlungseinrichtung auf, die zu einer Durchführung des erfindungsgemäßen Verfahrens oder dessen Weiterbildungen eingerichtet ist.

Die Ermittlungseinrichtung kann insbesondere zu Ermittlung von zumindest einer Umgebungsbedingung und/oder einer Betriebsbedingung der Gasturbinenanlage vorbereitet sein. D.h. vorteilhafterweise verfügt die Ermittlungseinrichtung der Anordnung über eine Messeinrichtung bzw. über Sensoren die beispielsweise zu einer Ermittlung der Verdichtereintrittstemperatur und/oder der Verdichtereintrittsfeuchte vorbereitet sind. Die Ermittlungseinrichtung ist zudem derart eingerichtet, dass der Grenzwert der Leitschaufelverstellung und/oder die maximal zulässige Turbineneintrittstemperatur oder die von der Turbineneintrittstemperatur abhängige maximal zulässige Temperatur ermittelbar ist.

Durch die Anordnung kann eine einfache Implementierung des Verfahrens bzw. dessen Umsetzung in einen Betrieb (eine Fahrweise) der Gasturbinenanlage erreicht werden.

Die Erfindung sieht außerdem eine Gasturbinenanlage mit einem Verdichter und einer Turbine vor. Eine besonders vorteilhaft betreibbare Gasturbinenanlage kann erreicht werden, wenn sie eine erfindungsgemäße Anordnung oder eine deren Weiterbildungen aufweist bzw. das erfindungsgemäße Verfahren oder eine dessen Weiterbildungen ausführt.

Bevorzugte Weiterbildungen der Erfindung ergeben sich auch aus den abhängigen Ansprüchen. Die Weiterbildungen beziehen sich sowohl auf das erfindungsgemäße Verfahren, auf die erfindungsgemäße Anordnung wie auch auf die erfindungsgemäße Gasturbinenanlage.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In einer vorteilhaften Ausgestaltung ist die zumindest eine aktuelle Umgebungsbedingung der Gasturbinenanlage eine Verdichtereintrittstemperatur und/oder eine Verdichtereintrittsfeuchte.

Die Verdichtereintrittsfeuchte kann eine relative oder absolute Feuchte sein. Sowohl die Temperatur als auch die Feuchte sind von besonderem Vorteil jeweils mit üblichen Messmitteln einfach und kostengünstig zu erfassende Größen, wodurch sich eine einfache Umsetzung des Verfahrens ergibt.

In einer weiteren Ausgestaltung wird vorgeschlagen, dass die zumindest eine Betriebsbedingung der Gasturbinenanlage eine Antriebswellendrehzahl ist.

Die Antriebswellendrehzahl kann bei einer mehrwelligen Gasturbinenanlage die Drehzahl der Verdichterantriebswelle oder der Turbinenantriebswelle, insbesondere eine sog. mechanische Drehzahl, sein.

Gemäß einer bevorzugten Weiterbildung ist der Grenzwert der Leitschaufelverstellung für den Verdichter der Gasturbine ein Grenzwert gegen eine Beeinträchtigung des Betriebs der Gasturbinenanlage.

Der Grenzwert kann ein oberer oder ein unterer Grenzwert sein. Bei Einhaltung des Grenzwertes im Betrieb der Gasturbinenanlage kann so auf einfache Weise erreicht werden, dass eine Beeinträchtigung des Betriebs durch eine unzulässige Leitschaufelverstellung vermieden bzw. verhindert wird.

In einer vorteilhaften Weiterbildung ist der Grenzwert gegen eine Beeinträchtigung des Betriebs der Gasturbinenanlage ein Grenzwert gegen Verdichterpumpen oder ein Grenzwert gegen Verdichtervereisen.

Das sog. Verdichterpumpen kann insbesondere bei einem Betrieb der Gasturbinenanlage bei einer Verdichtereintrittstemperatur oberhalb von 20°C, insbesondere im Temperaturbereich von 20°C bis 50°C, und in Abhängigkeit von der Leitschaufelverstellung (Turn-Up) auftreten und zu Schäden am Verdichter bzw. der Gasturbinenanlage führen.

Bei Einhaltung des Grenzwertes im Betrieb der Gasturbinenanlage kann so auf einfache Weise erreicht werden, dass ein Verdichterpumpen vermieden bzw. verhindert wird.

Das sog. Verdichtervereisen kann in Abhängigkeit der Verdichtereintrittstemperatur, Verdichtereintrittsfeuchte und Leitschaufelverstellung, insbesondere bei niedrigen Temperaturen und hohen Feuchten, auftreten und zu einer Beeinträchtigung der Gasturbinenintegrität bzw. zu einem Ausfall der Gasturbinenanlage führen.

Bei Einhaltung des Grenzwertes im Betrieb der Gasturbinenanlage kann so auf einfache Weise erreicht werden, dass ein Verdichtervereisen vermieden bzw. verhindert wird.

In einer vorteilhaften Ausführungsform wird die maximal zulässige Turbineneintrittstemperatur oder die von der Turbineneintrittstemperatur abhängige maximal zulässige Temperatur in Abhängigkeit der Verdichtereintrittstemperatur und/oder der Verdichtereintrittsfeuchte und/oder der Antriebswellendrehzahl und/oder des Grenzwerts der Leitschaufelverstellung ermittelt.

Die maximal zulässige Turbineneintrittstemperatur oder die von der Turbineneintrittstemperatur abhängige maximal zulässige Temperatur kann beispielsweise in Abhängigkeit von der Verdichtereintrittstemperatur und der Antriebswellendrehzahl ermittelt werden. So kann auf einfache Weise eine zu der Ermittlung des Grenzwerts der Leitschaufelverstellung korrespondierende Ermittlung erfolgen. Außerdem von Vorteil kann so auf dieselben Umgebungs- und Betriebsbedingungen zurückgegriffen werden, die beispielsweise in einer Leittechnik der Gasturbinenanlage als Zahlenwerte bzw. Daten abrufbar bzw. hinterlegt sein können.

In einer vorteilhaften Weiterbildung ist die maximal zulässige Temperatur eine Turbinenaustrittstemperatur.

Die Turbinenaustrittstemperatur kann typischerweise im Bereich von 400°C bis 700°C -und damit deutlich unterhalb der Turbineneintrittstemperatur im Bereich von 1200° bis 1700°C-liegen. Die Turbinenaustrittstemperatur kann auch eine sog. korrigierte Turbinenaustrittstemperatur (TOTC: turbine outlet temperature corrected) sein, in deren Ermittlung ein Korrekturwert einfließt, der beispielsweise von der Umgebungstemperatur abhängt.

Zwischen der Turbinenaustrittstemperatur bzw. der korrigierten Turbinenaustrittstemperatur und der Turbineneintrittstemperatur besteht ein zumindest mittelbarer Zusammenhang, der einen Rückschluss von der Turbinenaustrittstemperatur auf die Turbineneintrittstemperatur zulässt und umgekehrt. Vorteilhafterweise kann so eine messtechnische Erfassung der vergleichsweise niedrigeren Turbinenaustrittstemperatur mit üblichen, kostengünstigen und zuverlässigen Mitteln erzielt werden.

Gemäß einer bevorzugten Ausgestaltung wird das Verfahren jeweils für eine Mehrzahl vorgebbarer Zeitpunkte durchgeführt.

Typischerweise wird das Verfahren also für einen Zeitverlauf dergestalt durchgeführt, dass zu einer gewissen Zeit t1 in Abhängigkeit zumindest einer aktuellen Umgebungsbedingung der Gasturbinenanlage und/oder zumindest einer Betriebsbedingung der Gasturbinenanlage der Grenzwert der Leitschaufelverstellung und die maximal zulässige Turbineneintrittstemperatur oder die Turbinenaustrittstemperatur ermittelt wird. Zweckmäßigerweise wird die Gasturbinenanlage in einem Zeitraum t2-t1 mit dem so ermittelten Grenzwert bzw. unter Einhaltung des so ermittelten maximal zulässigen Temperaturwerts betrieben. Zu einem Zeitpunkt t2 erfolgt in Abhängigkeit der dann aktuellen, also unter Umständen im Vergleich zu t1 geänderten, Umgebungs- bzw. Betriebsbedingungen eine erneute Ermittlung. Auf diese Weise kann eine besonders gute Adaption des Betriebes der Gasturbinenanlage an zeitlich veränderliche Umgebungs- und/oder Betriebsbedingungen erreicht werden.

Vorteilhafterweise liegen die vorgebbaren Zeitpunkte innerhalb eines Turn-Up-Betriebs der Gasturbinenanlage. Von Vorteil kann so erreicht werden, dass während der thermisch kritischen Phase des Turn-Up kein Überfeuern der Gasturbine eintritt.

In einer weiteren Ausführungsform der Erfindung wird vorgeschlagen, dass das Verfahren zu einer Steuerung und Regelung des Betriebs der Gasturbinenanlage eingesetzt wird.

So kann steuerungs- bzw. regelungstechnische auf einfache Art eine Einhaltung der maximal zulässigen Turbineneintrittstemperatur erreicht und ein Überfeuern der Gasturbine, insbesondere während einer Leistungssteigerung durch einen Turn-Up-Betrieb, vermieden werden.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren, der erfindungsgemäßen Anordnung und der erfindungsgemäßen Gasturbinenlage gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
FIG 1 einen Schnitt durch eine erfindungsgemäße Gasturbinenanlage mit einer Anordnung zur Steuerung der Gasturbinenanlage,
FIG 2 eine schematische Darstellung einer Steuerung des Betriebs der Gasturbinenanlage,
FIG 3 ein Diagramm mit einem Kurvenverlauf des Leitschaufelverstellungsgrenzwertes in Abhängigkeit einer Größe nv,
FIG 4 ein Diagramm mit einen Kurvenverlauf des maximal zulässigen Turbinenaustrittstemperaturwertes in Abhängigkeit der Größe nv,
FIG 5 ein Diagramm mit einen Kurvenverlauf des maximal zulässigen Turbinenaustrittstemperaturwertes in Abhängigkeit der Verdichtereintrittstemperatur,
FIG 6 ein weiteres Diagramm mit einen Kurvenverlauf des maximal zulässigen Turbinenaustrittstemperaturwertes in Abhängigkeit des Leitschaufelverstellungsgrenzwertes,
FIG 7 ein Diagramm mit einem Kurvenverlauf der Leistung der Gasturbinenanlage in Abhängigkeit des maximal zulässigen Turbinenaustrittstemperaturwertes und
FIG 8 ein Diagramm mit zwei Kurvenverläufen einer Turbineneintrittstemperatur und einem Kurvenverlauf des Leitschaufelverstellungswertes, jeweils über der Verdichtereintrittstemperatur.

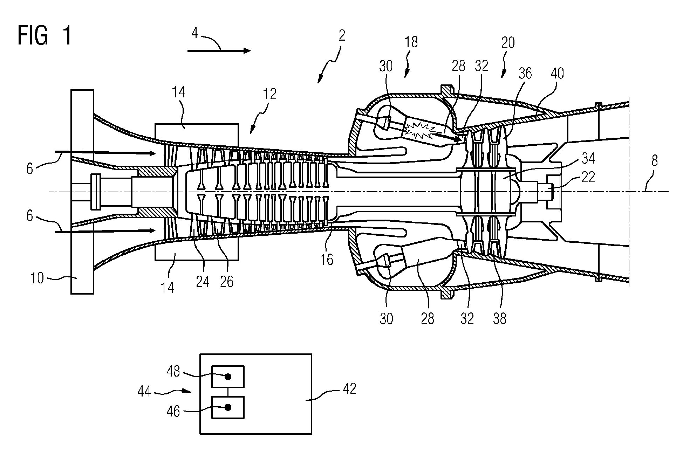

FIG 1 zeigt eine schematische Darstellung einer Gasturbinenanlage 2. Im folgenden Text werden die Begriffe Gasturbinenanlage und Gasturbine äquivalent verwendet. Die Gasturbine 2 weist unter anderem in Hauptströmungsrichtung 4 eines Strömungsmediums 6, wie beispielsweise Luft, bzw. in Längsrichtung einer Rotationsachse 8 einen Verdichtereintritt 10, einen Verdichter 12, eine Leitschaufelverstelleinrichtung 14, einen Verdichteraustritt 16, eine Brennereinheit 18 und eine Turbine bzw. Turbineneinheit 20 auf.

Die Leitschaufelverstelleinrichtung 14 ist im gegebenen Ausführungsbeispiel zweiteilig dargestellt bzw. rotationssymmetrisch zur Rotationsachse 8 ausgeführt, was selbstverständlich nicht zwingend der Fall sein muss.

Die Gasturbine weist zudem eine Antriebwelle 22 auf, die um die Rotationsachse 8 rotierbar ist und sich longitudinal entlang der Gasturbine 2 erstreckt. Die Antriebswelle 22 verbindet die Turbineneinheit 20 antriebs- bzw. drehfest mit dem Verdichter 12.

Der Verdichter 14 weist eine Abfolge von axial angeordneten Verdichterleitschaufelstufen 24 und Verdichterschaufelstufen 26 auf. Zumindest eine Stufe bzw. eine Reihe der Verdichterleitschaufeln ist zur Verstellung, also zur Verdrehung gegen die Hauptströmungsrichtung 4 des Strömungsmediums 6, durch die Leitschaufelverstelleinrichtung 14 vorbereitet.

Während eines Betriebs der Gasturbine 2 tritt das Strömungsmedium 6 durch den Verdichtereintritt 10 in den Verdichter 12 ein. Das Strömungsmedium 6 wird im Verdichter 12 komprimiert und dadurch auf 300°C bis 500°C erhitzt. Das komprimierte Strömungsmedium 6 wird über den Verdichteraustritt 16 der Brennereinheit 18, die beispielsweise in Form eine Ringbrennereinheit ausgeführt sein kann, zugeführt. Die Brennereinheit 18 weist eine oder mehreren Brennkammern 28 mit jeweils einem Brenner 30 auf.

Das aus dem Verdichter 12 kommende, komprimierte Strömungsmedium 6 wird zumindest anteilig in die Brennereinheit 18 bzw. die Brennkammer 28 geleitet und dort mit einem gasförmigen oder flüssigen Brennstoff gemischt. Das derart in der Brennereinheit 18 gebildete zündfähige Gemisch wird dann gezündet bzw. verbrannt und das Brenngas bzw. das Arbeitsgas der Verbrennung wird über einen Übergangskanal 32 zu der Turbineneinheit 20 der Gasturbine 2 geleitet.

Die Turbineneinheit 20 weist mehrere mit der Antriebswelle 22 verbundene Turbinenräder 34 mit Turbinenschaufeln 36 auf. Zudem sind axial zwischen den Turbinenrädern 34 Turbinenleitschaufeln 38 angeordnet. Die Turbinenleitschaufeln 38 der Turbineneinheit 20 sind wiederum mit einem Stator 40 verbunden.

Das Verbrennungsgas aus der Brennkammer bzw. den Brennkammern 28 tritt durch den Übergangskanal 32 in die Turbineneinheit 20 ein und treibt die Turbinenschaufeln 36 derart an, dass die Antriebswelle 22 rotatorisch angetrieben wird und ein Drehmoment um die Rotationsachse 8 der Gasturbine 2 generiert wird. Die Turbinenleitschaufeln 38 dienen dazu, das Verbrennungsgas bzw. das Arbeitsgas auf die Turbinenschaufeln 36 zu lenken, also der Strömungsführung.

Die Verdichterschaufelstufen 26 werden durch die Antriebswelle 22, also durch das in der Turbineneinheit 20 generierte Drehmoment, angetrieben und in eine Drehung um die Rotationsachse 8 versetzt, wodurch das komprimierte Strömungsmedium 6 von der Gasturbine 2 selbst generiert wird sobald diese sich in einem entsprechenden Betriebszustand befindet.

Die Gasturbine 2 weist des Weiteren eine Steueranordnung 42 auf, welche zu einer besseren Darstellbarkeit in FIG 1 außerhalb bzw. baulich getrennt von der Gasturbine 2 dargestellt ist. Die Steueranordnung 42 weist eine Ermittlungseinrichtung 44 auf. Die Steueranordnung 42 dient unter anderem zu einer Steuerung eines Betriebes der Gasturbine 2.

Die Ermittlungseinrichtung 44 ist zur Ermittlung von zumindest einer Umgebungsbedingung und/oder einer Betriebsbedingung der Gasturbinenanlage 2 vorbereitet. Im gegebenen Ausführungsbeispiel ist die Ermittlungseinrichtung 44 der Steueranordnung 42 zu einer Ermittlung der Verdichtereintrittstemperatur und/oder der Verdichtereintrittsfeuchte und oder einer Drehzahl der Antriebswelle 22 vorbereitet. Die Ermittlungseinrichtung ist zudem derart eingerichtet, dass der Grenzwert 46 der Leitschaufelverstellung und die maximal zulässige Turbinenaustrittstemperaturwert 48 ermittelbar sind. Die Steueranordnung 42 kann dazu vorbereitet sein, die Leitschaufelverstelleinrichtung 14 anzusteuern um eine Verstellung der Verdichterleitschaufelstufen 24 gegen die Hauptströmungsrichtung 4 einzuleiten.

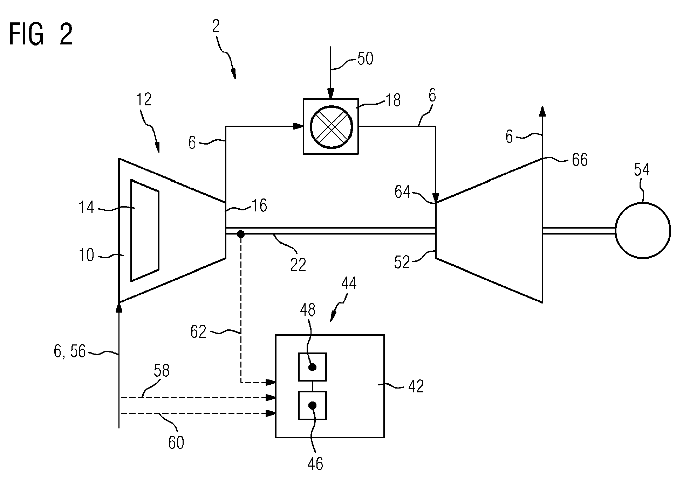

Eine schematische Darstellung einer Steuerung des Betriebs der Gasturbinenanlage 2 ist in FIG 2 dargestellt und nachfolgend beschrieben. Während eines Betriebs der Gasturbinenanlage 2 strömt das Strömungsmedium 6 aus einer nicht näher beschriebenen Umgebung in den Verdichtereintritt 10 des Verdichters 12 der Gasturbinenanlage 2. Das Strömungsmedium 6 wird im Verdichter 12 komprimiert, tritt über den Verdichteraustritt 16 aus dem Verdichter 12 aus und gelangt nachfolgend in die Brennereinheit 18.

In der Brennereinheit 18 wird aus dem komprimierten Strömungsmedium 6 unter Zuführung eines Brennstoffmassenstromes 50, beispielsweise eines Massenstromes eines Gases, ein zündfähiges Gemisch hergestellt und zur Zündung gebracht, wobei die Zündung insbesondere kontinuierlich abläuft.

Das gezündete Strömungsmedium 6 verlässt die Brennereinheit 18 in Hauptströmungsrichtung 4 (siehe FIG 1) und tritt über den Turbineneintritt 52 in die Turbineneinheit 20 der Gasturbinenanlage 2 ein und versetzt die Turbinenräder 34 (siehe FIG 1) in Rotation, derart, dass ein Drehmoment auf die Antriebswelle 22 übertragen wird.

Eine aus dem derart generierten Drehmoment und der Drehzahl der Antriebswelle 22 resultierende Leistung der Gasturbinenanlage 2 wird zu einem Teil an den antriebswellenseitig montierten Verdichter 12 zur Verrichtung von Kompressionsarbeit übertragen. Ein anderer Teil der Leistung der Gasturbinenanlage 2 wird als Nutzleistung an einen Generator 54 übertragen und in diesem in elektrische Energie umgesetzt.

Ausgehend von einem Grundlastbetrieb der Gasturbinenanlage 2 erfolgt zum Betreiben der Gasturbinenanlage 2 mit einer Leistung oberhalb der Grundlast, beispielsweise bei 105% der Grundlast, ein sog. Turn-Up-Betrieb, d.h. der Ansaugluftmassenstrom 56 wird durch eine Verstellung der Verdichtervorleitschaufeln bzw. einer oder mehrerer Verdichterleitschaufelstufen 24 (siehe FIG 1) erhöht. Zur Verstellung der Verdichterleitschaufelstufen 24 erfolgt eine Ansteuerung der Leitschaufelverstelleinrichtung 14.

Die Ermittlungseinrichtung 44 der Steueranordnung 42 erfasst bzw. ermittelt einen Temperaturwert (die "Temperatur") und einen Feuchtewert bzw. einen Feuchtigkeitswert (die "Feuchte", "Feuchtigkeit") des am Verdichtereintritt 10 einströmenden Strömungsmediums 6, d.h. eine Verdichtereintrittstemperatur 58 und eine Verdichtereintrittsfeuchte 60. Eine Ermittlung der Verdichtereintrittsfeuchte 60 und der Verdichtereintrittstemperatur 58 kann beispielsweise über hierfür geeignete Sensoren oder über anderweitige Messeinrichtungen erfolgen, wobei die Sensoren oder die Messeinrichtungen auch integraler Bestandteil der Steueranordnung 42 sein können. Außerdem erfasst bzw. ermittelt die Ermittlungseinrichtung 44 die Drehzahl der Antriebswelle 22, also eine Antriebswellendrehzahl 62. Im Falle einer mehrwelligen Ausführung der Gasturbinenanlage 2 kann anstelle von oder zusätzlich zur Antriebswellendrehzahl 62 eine Drehzahl einer anderen als der Antriebswelle 22 erfasst werden.

Im gegebenen Ausführungsbeispiel ermittelt die Ermittlungseinrichtung 44 in Abhängigkeit der Verdichtereintrittstemperatur 58 und der Antriebswellendrehzahl 62 den Leitschaufelverstellungsgrenzwert 46. Der Leitschaufelverstellungsgrenzwert 46 ist ein Grenzwert der Verstellung der Verdichterleitschaufeln 24 der Verdichters 12 bei dessen Erreichen bzw. Unter- oder Überschreiten das sog. Verdichterpumpen zu erwarten ist. Üblicherweise tritt das Verdichterpumpen vermehrt bei erhöhter Verdichtereintrittstemperatur 58 auf, insbesondere in einem Bereich von 20°C bis 50°C. Außerdem ermittelt die Ermittlungseinrichtung 44 in Abhängigkeit der Verdichtereintrittstemperatur 58 und der Antriebswellendrehzahl 62 den maximal zulässigen Turbinenaustrittstemperaturwert 48. Alternativ kann der maximal zulässige Turbinenaustrittstemperaturwert 48 auch in Abhängigkeit des Leitschaufelverstellungsgrenzwerts 46 ermittelt werden.

Durch die Ermittlung des maximal zulässige Turbinenaustrittstemperaturwerts 48 kann durch eine etwaig nachgeschaltete Verarbeitung in der Steueranordnung bzw. in einer Leittechnik der Gasturbinenanlage 2 eine Einhaltung einer maximal zulässigen Turbineneintrittstemperatur 64, die von einer Turbinenaustrittstemperatur 66 abhängt, in einem Turn-Up-Betrieb der Gasturbinenanlage 2 erzielt werden.

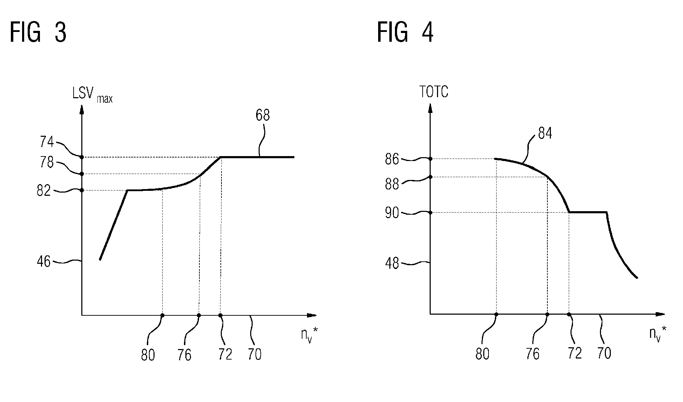

FIG 3 zeigt ein Diagramm mit einen Kurvenverlauf 68 des durch die Ermittlungseinrichtung 44 (siehe FIG 1, 2) ermittelten Leitschaufelverstellungsgrenzwertes 46 (Ordinate [%]) in Abhängigkeit einer Größe nv 70 (Abszisse []). Die Größe nv ist dabei eine Größe, die in Abhängigkeit von der Verdichtereintrittstemperatur 58 und der Antriebswellendrehzahl 62 ermittelbar ist (siehe FIG 2). Alternativ ist auch eine unmittelbare Ermittlung des Leitschaufelverstellungsgrenzwertes 46 in Abhängigkeit von der Verdichtereintrittstemperatur 58 und der Antriebswellendrehzahl 62 möglich.

Gemäß den Kurvenverlauf 68 ergibt sich für einen nv-Wert 72, der im gegebenen Ausführungsbeispiel für eine Verdichtereintrittstemperatur 58 von 20°C und eine Antriebswellendrehzahl 62 von 60 Hz ermittelt wurde, ein Leitschaufelverstellungsgrenzwert 74. Für einen verringerten nv-Wert 76 ergibt sich ein Leitschaufelverstellungsgrenzwert 78, wobei der nv-Wert 76 mit einer Verdichtereintrittstemperatur 58 von 27°C und einer Antriebswellendrehzahl 62 von ebenfalls 60 Hz korrespondiert. Für einen nochmals verringerten nv-Wert 80 ergibt sich ein Leitschaufelverstellungsgrenzwert 82, wobei der nv-Wert 80 mit einer Verdichtereintrittstemperatur 58 von 50°C und einer Antriebswellendrehzahl 62 von ebenfalls 60 Hz korrespondiert. Folglich fällt der Leitschaufelverstellungsgrenzwert 46 bei gleichbleibender Antriebswellendrehzahl 62 und steigender Verdichtereintrittstemperatur 58 von 20°C (72), über 27°C (76) bis 50°C (80) - also bei einem Abnehmen nv 70.

Vereinfacht ausgedrückt sind mit steigender Verdichtereintrittstemperatur 58, insbesondere oberhalb 20°C (also unterhalb des nv-Wertes 72), nur geringere Leitschaufelverstellungen zulässig, um ein Verdichterpumpen zu vermeiden. Unterhalb einer Verdichtereintrittstemperatur 58 von 20°C (also oberhalb des nv-Wertes 72) stellt sich gemäß dem Kurvenverlauf 68 ein konstanter Leitschaufelverstellungsgrenzwert 74 ein.

FIG 4 zeigt ein Diagramm mit einen Kurvenverlauf 84 des durch die Ermittlungseinrichtung 44 (siehe FIG 1, 2) ermittelten maximal zulässigen Turbinenaustrittstemperaturwertes 48 (Ordinate [°C]) in Abhängigkeit der Größe nv 70 (Abszisse []). Dabei sind die nv-Werte 72, 76 und 80 identisch mit den in FIG 3 angegebenen Werten.

Ausgehend vom einem nv-Wert 80 und einem maximal zulässigen Turbinenaustrittstemperaturwert 86 stellen sich mit steigendem nv (76, 72) fallende maximal zulässige Turbinenaustrittstemperaturwerte (88, 90) ein. Dabei ist der Kurvenverlauf 84 zwischen den nv-Werten 80 und 72 nichtlinear. Oberhalb des nv-Wertes 72, also unterhalb einer Verdichtereintrittstemperatur 58 von 20°C bei gleichbleibender Antriebswellendrehzahl 64 von 60 Hz, bleibt der maximal zulässige Turbinenaustrittstemperaturwert 90 in einem gewissen Bereich konstant, wobei auch eine andere Antriebswellendrehzahl 64 als 60 Hz möglich ist, insbesondere 50 Hz. Folglich sind mit steigender Verdichtereintrittstemperatur 58 höhere Turbinenaustrittstemperaturen 66 zulässig.

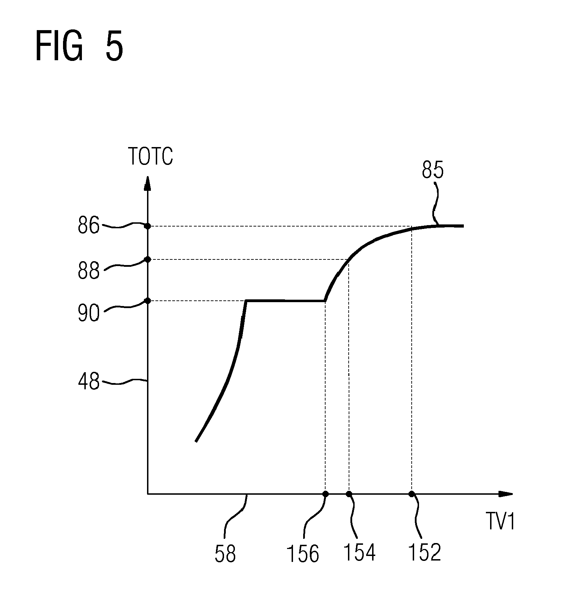

FIG 5 zeigt ein Diagramm mit einen Kurvenverlauf 85 des maximal zulässigen Turbinenaustrittstemperaturwertes 48 (Ordinate [°C]) in Abhängigkeit der Verdichtereintrittstemperatur 58 (Abszisse [°C]). Dabei sind die maximal zulässigen Turbinenaustrittstemperaturwerte 86, 88 und 90 identisch mit den in FIG 4 angegebenen Werten.

Ausgehend vom einem Verdichtereintrittstemperaturwert 152 von 50°C und einem maximal zulässigen Turbinenaustrittstemperaturwert 86 stellen sich mit fallender Verdichtereintrittstemperatur (154, 156) fallende maximal zulässige Turbinenaustrittstemperaturwerte (88 (27°C), 90 (20°C)) ein. Dabei ist der Kurvenverlauf 85 zwischen den Verdichtereintrittstemperaturwerten 152 (50°C) und 156 (20°C) nichtlinear. Unterhalb des Verdichtereintrittstemperaturwertes 156 von 20°C bei gleichbleibender Antriebswellendrehzahl 64 von 60 Hz, bleibt der maximal zulässige Turbinenaustrittstemperaturwert 90 in einem gewissen Bereich konstant, wobei auch eine andere Antriebswellendrehzahl 64 als 60 Hz möglich ist, insbesondere 50 Hz.

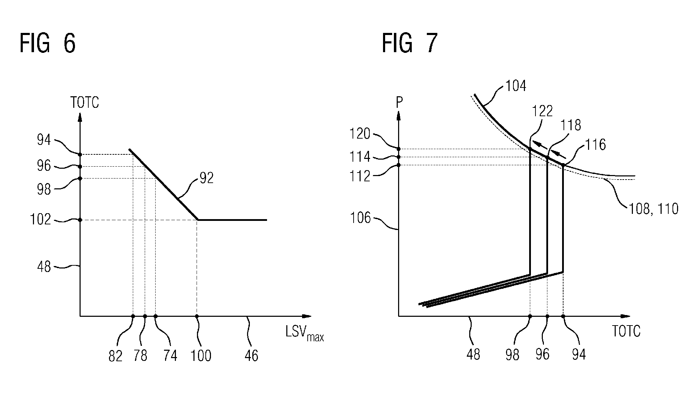

FIG 6 zeigt ein weiteres Diagramm mit einen Kurvenverlauf 92 des durch die Ermittlungseinrichtung 44 (siehe FIG 1, 2) ermittelbaren maximal zulässigen Turbinenaustrittstemperaturwertes 48 (Ordinate [°C]). In diesem Ausführungsbeispiel erfolgt die Ermittlung im Gegensatz zu dem in FIG 4 gezeigten Ausführungsbeispiel in Abhängigkeit des Leitschaufelverstellungsgrenzwertes 46 (Abszisse [%]). Dabei sind die Leitschaufelverstellungsgrenzwerte 82, 78 und 74 identisch mit den in FIG 3 angegebenen Werten.

Ausgehend vom einem Leitschaufelverstellungsgrenzwert 82 und einem maximal zulässigen Turbinenaustrittstemperaturwert 94 stellen sich mit steigendem Leitschaufelverstellungsgrenzwert (78, 74) fallende maximal zulässige Turbinenaustrittstemperaturwerte (96, 98) ein. Dabei ist der Kurvenverlauf 92 zwischen den Leitschaufelverstellungsgrenzwerten 82 und 100 linear. Oberhalb des Leitschaufelverstellungsgrenzwertes 100 bleibt der maximal zulässige Turbinenaustrittstemperaturwert 102 konstant.

Vereinfacht gesagt, ergeben sich mit steigendem Turn-Up bzw. steigendem Leitschaufelverstellungsgrenzwert 46 geringere maximal zulässige Turbinenaustrittstemperaturwerte 48.

FIG 7 zeigt ein Diagramm mit einem Kurvenverlauf 104 der Leistung 106 der Gasturbinenanlage (Ordinate [MW]) in Abhängigkeit des maximal zulässigen Turbinenaustrittstemperaturwertes 48 (Abszisse [°C]). Dabei wird der Kurvenverlauf 104 der Leistung 106 unter Einhaltung eines maximal zulässigen Turbineneintrittstemperaturwerts 108, der durch die strichliert eingezeichnete Isotherme 110 verdeutlicht wird, erzielt. Die eingezeichneten Turbinenaustrittstemperaturwerte 94, 96 und 98 sind identisch mit den in FIG 5 angegebenen Werten.

Anhand des Diagramms in FIG 6 kann verdeutlicht werden, wie durch eine Beeinflussung des maximal zulässigen Turbinenaustrittstemperaturwertes 48 eine Leistungssteigerung der Gasturbinenanlage 2 (siehe FIG 1, 2) unter Einhaltung bzw. Konstanthaltung des maximal zulässigen Turbineneintrittstemperaturwerts 108 erzielt werden kann.

Ausgehend von einem Turbinenaustrittstemperaturwert 94 und einer Leistung der Gasturbinenanlage 2 mit einem Leistungswert 112 wird durch Erhöhen des Massenstroms durch ein Öffnen der Leitschaufel eine Leistungssteigerung erreicht, während durch Verringerung der TOTC ein Überfeuern der Turbine verhindert wird bzw. ein Einhalten der zulässigen Turbineneintrittstemperatur gewährleistet wird. Dabei liegen sowohl der Zustand 116 als auch der Zustand 118 auf der Isothermen 110, d.h. der maximal zulässige Turbineneintrittstemperaturwert 108 wird während der Leistungssteigerung vom Wert 112 auf den Wert 114 eingehalten.

Weiterhin ausgehend von dem Turbinenaustrittstemperaturwert 96 und dem Leistungswert 114 wird durch eine nochmalige Verringerung der Turbinenaustrittstemperatur auf den Turbinenaustrittstemperaturwert 98 eine weitere Steigerung der Leistung auf einen Leistungswert 120 durch ein Öffnen der Leitschaufel bei einer Einhaltung der Turbineneintrittstemperatur erreicht. Dabei liegt auch der Zustand 122 auf der Isothermen 110, d.h. der maximal zulässige Turbineneintrittstemperaturwert 108 wird auch während der Leistungssteigerung vom Wert 114 auf den Wert 120 eingehalten.

Folglich wird die Leistungssteigerung vom Wert 112 auf den Wert 120 unter Umgehung einer zusätzlichen thermischen Beanspruchung der Turbineneinheit 20 der Gasturbinenanlage (siehe jeweils FIG 1) erzielt. D.h. vorteilhafterweise ist der Betrieb der Gasturbinenanlage bezüglich der thermischen Beanspruchung der Turbineneinheit 20 insbesondere auch permanent in einer sog. Turn-Up-Fahrweise möglich.

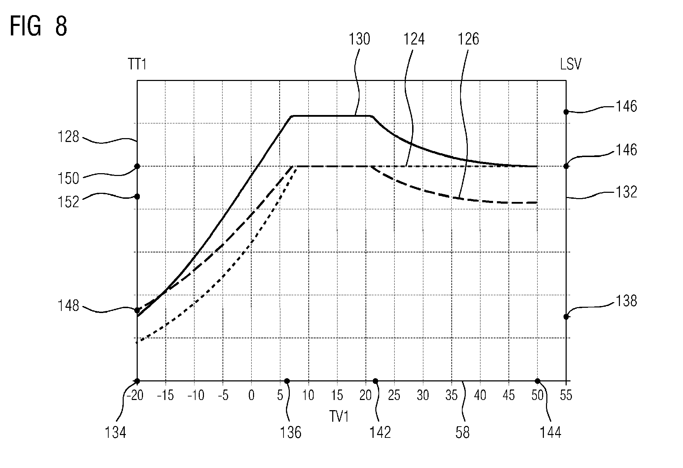

FIG 8 zeigt ein Diagramm mit zwei Kurvenverläufen 124, 126 einer Turbineneintrittstemperatur 128 (linke Ordinate [°C]) in Abhängigkeit der Verdichtereintrittstemperatur 58 (Abszisse [°C]). Zudem ist ein weiterer Kurvenverlauf 130 eines maximal zulässigen Leitschaufelverstellungswertes 132 (rechte Ordinate [%]), ebenfalls über der Verdichtereintrittstemperatur 58 (Abszisse [°C]), eingezeichnet.

Im vorliegenden Ausführungsbeispiel erfolgt über einer zunehmenden Verdichtereintrittstemperatur 58 von einem Verdichtereintrittstemperaturwert 134 auf einen Verdichtereintrittstemperaturwert 136 ein Turn-Up der Leitschaufelverstellung von einem Leitschaufelverstellungswert 138 auf einen Leitschaufelverstellungswert 140. Bei einem weiteren Anstieg der Verdichtereintrittstemperatur 58 auf einen Verdichtereintrittstemperaturwert 142 findet kein weiterer Turn-Up statt, d.h. der Wert der Leitschaufelverstellung wird konstant gehalten. Oberhalb des Verdichtereintrittstemperaturwerts 142 findet bis hin zu einem Verdichtereintrittstemperaturwert 144 eine asymptotische Reduzierung des Turn-Up auf einen Leitschaufelverstellungswert 146 statt. Vereinfacht ausgedrückt, wird die Leitschaufelverstellung zurückgefahren um ein Verdichterpumpen zu verhindern bzw. zu vermeiden.

Der Kurvenverlauf 126 der Turbineneintrittstemperatur 128 korrespondiert mit dem beschriebenen Kurvenverlauf 130 des Leitschaufelverstellungswertes 132: Über der zunehmenden Verdichtereintrittstemperatur 58, also ausgehend von dem Verdichtereintrittstemperaturwert 134 hin zu dem Verdichtereintrittstemperaturwert 136, steigt die Turbineneintrittstemperatur 128 von einem Turbineneintrittstemperaturwert 148 auf einen maximal zulässigen Turbineneintrittstemperaturwert 150.

Bei einem weiteren Anstieg der Verdichtereintrittstemperatur 58 auf den Verdichtereintrittstemperaturwert 142 findet keine weitere Erhöhung der Turbineneintrittstemperatur 128 statt. D.h. die Gasturbine wird über eine Steuerung des maximal zulässigen Turbinenaustrittstemperaturwertes 48 in Abhängigkeit von der Leitschaufelverstellung, der Verdichtereintrittstemperatur 58 oder dem nv-Wert (vgl. FIG 4, 5, 6, 7) derart betrieben, dass es nicht zu einer Überfeuerung der Turbineneinheit 20 (vgl. FIG 1) kommt.

Oberhalb des Verdichtereintrittstemperaturwerts 142 findet bis hin zum Verdichtereintrittstemperaturwert 144 eine asymptotische Reduzierung der Turbineneintrittstemperatur 128 auf einen Turbineneintrittstemperaturwert 152 statt. Dabei ergibt sich die Reduzierung der Turbineneintrittstemperatur 128 aus der steuerungs- bzw. regelungstechnischen Reduzierung des maximal zulässigen Turbinenaustrittstemperaturwertes 48 in Abhängigkeit von der Leitschaufelverstellungswertes 132.

Der Kurvenverlauf 124 zeigt eine steuerungs- bzw. regelungstechnische Weiterbildung, bei der auch oberhalb des Verdichtereintrittstemperaturwerts 142 eine prozesstechnisch vorteilhafte Konstanthaltung der Turbineneintrittstemperatur 128 erreicht wird. Die Konstanthaltung kann durch eine alternative bzw. erweiterte Ermittlung des maximal zulässigen Turbinenaustrittstemperaturwertes 48 erreicht werden.

## Patentansprüche

1. Verfahren zum Betreiben einer Gasturbinenanlage (2) mit einem Verdichter (12) und einer Turbine (20),
**dadurch gekennzeichnet, dass**
→ in Abhängigkeit von
- zumindest einer aktuellen Umgebungsbedingung der Gasturbinenanlage (2) und/oder
- zumindest einer Betriebsbedingung der Gasturbinenanlage (2)
ein Grenzwert einer Leitschaufelverstellung (46) für den Verdichter (12) der Gasturbine (2) ermittelt wird und
→ für diese zumindest eine aktuelle Umgebungsbedingung und/oder die zumindest eine Betriebsbedingung ein zu dem Grenzwert der Leitschaufelverstellung (46) für den Verdichter (12) korrespondierende
→ maximal zulässige Turbineneintrittstemperatur (108, 150) oder
→ eine von der Turbineneintrittstemperatur (64) abhängige maximal zulässige Temperatur
für die Turbine (20) der Gasturbine (2) ermittelt wird und
→ die Gasturbine (2) unter Berücksichtigung der ermittelten maximal zulässigen Turbineneintrittstemperatur (108, 150) oder der ermittelten maximal zulässigen Temperatur betrieben wird.

2. Verfahren nach Anspruch 1,
**dadurch gekennzeichnet, dass** die zumindest eine aktuelle Umgebungsbedingung der Gasturbinenanlage (2)
→ eine Verdichtereintrittstemperatur (58) und/oder
→ eine Verdichtereintrittsfeuchte (60) ist.

3. Verfahren nach einem der vorherigen Ansprüche,
**dadurch gekennzeichnet, dass** die zumindest eine Betriebsbedingung der Gasturbinenanlage (2) eine Antriebswellendrehzahl (62) ist.

4. Verfahren nach einem der vorherigen Ansprüche,
**dadurch gekennzeichnet, dass** der Grenzwert der Leitschaufelverstellung (46) für den Verdichter (2) der Gasturbine ein Grenzwert (47) gegen eine Beeinträchtigung des Betriebs der Gasturbinenanlage (2) ist.

5. Verfahren nach Anspruch 4,
**dadurch gekennzeichnet, dass** der Grenzwert (47) gegen eine Beeinträchtigung des Betriebs der Gasturbinenanlage (2)
→ ein Grenzwert gegen Verdichterpumpen oder
→ ein Grenzwert gegen Verdichtervereisen ist.

6. Verfahren nach einem der vorherigen Ansprüche,
**dadurch gekennzeichnet, dass** die maximal zulässige Turbineneintrittstemperatur (108, 150) oder die von der Turbineneintrittstemperatur (64) abhängige maximal zulässige Temperatur in Abhängigkeit
→ der Verdichtereintrittstemperatur (58) und/oder
→ der Verdichtereintrittsfeuchte (60) und/oder
→ der Antriebswellendrehzahl 62) und/oder
→ des Grenzwerts der Leitschaufelverstellung (46) ermittelt wird.

7. Verfahren nach einem der vorherigen Ansprüche,
**dadurch gekennzeichnet, dass** die maximal zulässige Temperatur eine Turbinenaustrittstemperatur (66) ist.

8. Verfahren nach einem der vorherigen Ansprüche, durchgeführt jeweils für eine Mehrzahl vorgebbarer Zeitpunkte.

9. Verfahren nach Anspruch 8,
**dadurch gekennzeichnet, dass** die vorgebbaren Zeitpunkte innerhalb eines Turn-Up-Betriebs der Gasturbinenanlage (2) liegen.

10. Verfahren nach einem der vorhergehenden Ansprüche, eingesetzt zu einer Steuerung und Regelung des Betriebs der Gasturbinenanlage (2).

11. Anordnung (42) zur Steuerung einer Gasturbinenanlage (2) mit einem Verdichter (12) und einer Turbine (20), **gekennzeichnet durch**
→ eine Ermittlungseinrichtung (44) eingerichtet derart, dass das Verfahren nach Anspruch 1 durchführbar ist.

12. Gasturbinenanlage (2) mit einem Verdichter (12) und einer Turbine (20),
**gekennzeichnet durch** eine Anordnung (42) nach Anspruch 11.
